# EUROPÄISCHE PATENTSCHRIFT

(11) **EP 0 897 788 B1**
(45) Veröffentlichungstag und Bekanntmachung des Hinweises auf die Patenterteilung: **31.10.2001**
(21) Anmeldenummer: 97114325.0
(22) Anmeldetag: 20.08.1997
(51) Int. Cl.: B29C 47/06, B29C 47/12, B29C 44/32

(54) **Verfahren zur Herstellung eines wärmeisolierten Leitungsrohres**
Method of manufacturing heat insulated pipe
Procédé pour la fabrication d'un tuyau isolé thermiquement

(43) Veröffentlichungstag der Anmeldung: 24.02.1999
(73) Patentinhaber: BRUGG Rohrsysteme GmbH, D-31515 Wunstorf (DE)
(72) Erfinder: Friessner, Jürgen, 30900 Wedemark (DE); Schnell, Urs, 5242 Lupfig (CH); Oeschger, Alfred, 5276 Wil /AG) (CH)

(56) Entgegenhaltungen:
- DE-A- 2 316 835
- DE-A- 2 803 708
- DE-A- 3 307 120
- DE-A- 3 530 187
- GB-A- 1 157 239
- US-A- 4 605 525
- US-A- 5 324 557

## Beschreibung

Die Erfindung betrifft ein Verfahren zur Herstellung eines wärmeisolierten Leitungsrohres nach dem Oberbegriff des Anspruchs 1.

Aus dem DE-GM 93 10 530 ist ein wärmeisoliertes Leitungsrohr bekannt, welches aus einem mediumführenden Innenrohr aus vernetztem Polyethylen, einem mit einer leichten Wellung versehenen Schutzmantel aus Kunststoff sowie einer zwischen dem Innenrohr und dem Schutzmantel befindlichen Schaumstoffschicht besteht. Das bekannte Leitungsrohr wird vornehmlich in Fern- und Nahwärmenetzen, als Trink- und Abwasserleitung und in zahlreichen weiteren Spezialbereichen eingesetzt. Es zeichnet sich durch ein optimales Biegeverhalten, d. h. kleine Biegeradien, minimale Rückfederungskräfte, eine hohe statische Belastbarkeit sowie eine gute Längswasserdichtigkeit aus. Das Leitungsrohr läßt sich leicht in Gräben einziehen.

Aus der GB-A-1 482 661 A ist ein Verfahren zur Herstellung eines wärmeisolierten Leitungsrohres bekannt, bei welchem ein Rohr aus Kunststoff kontinuierlich in einen Extruder eingeführt wird. Der Extruder erzeugt konzentrisch und im Abstand zu dem zugeführten Rohr einen Schutzmantel aus Kunststoff. Im gleichen Arbeitsgang wird in den Ringspalt zwischen dem inneren Rohr und dem Schutzmantel ein aufschäumbarer Kunststoff eingeleitet, der den Ringspalt vollkommen ausfüllen soll. Unmittelbar hinter dem Extruder gelangt das Leitungsrohr in eine Kühl-/Kalibriervorrichtung, in welcher der Schutzmantel abgekühlt und auf einen bestimmten Außendurchmesser kalibriert wird. Mit diesem Verfahren können wärmeisolierte Leitungsrohre mit einem Kunststoffinnenrohr, einem Schutzmantel aus Kunststoff sowie einer Schaumstoffschicht zwischen dem Innenrohr und dem Schutzmantel in kontinuierlicher Arbeitsweise in großen Längen hergestellt werden.

Aus der DE-A-28 03 708 ist eine Vorrichtung zur Herstellung eines flexiblen Mehrlagenisolierrohres mit einem glatten Innenrohr aus thermoplastischem Kunststoff, einem Außenrohr aus thermoplastischem Kunststoff sowie einer Isolierschicht zwischen Innen- und Außenrohr bekannt, in welcher das Innenrohr einer Rohrformmaschine für das Außenrohr zugeführt wird, in der das Außenrohr konzentrisch und im Abstand zum Innenrohr extrudiert wird. Mittels einer Schneckenpresse wird ein Schaumkunststoff in den Ringspalt zwischen dem Innen- und dem Außenrohr eingespritzt. Das frisch extrudierte Außenrohr wird in eine Hohlform aus endlos umlaufenden Formketten eingeführt, welche das Außenrohr abstützt und kalibriert. In einer Ausführungsform weisen die Formketten ein wellenartiges Profil auf. Durch Aufbringen eines Vakuums zwischen den Formketten und dem noch weichen Schutzmantel kann dieser in die Wellenform der Formketten hereingezogen werden, so daß der Schutzmantel eine wellenförmige Oberfläche aufweist.

Aus der DE-A-35 30 187 ist ein Verfahren zur Herstellung eines wärmeisolierten Leitungsrohres bekannt, bei dem ein aus Kunststoff oder Metall bestehendes Innenrohr mit einem aus einer Kunststoffolie gebildeten Schlauch im Abstand umgeben wird, in den zwischen Innenrohr und Schlauch gebildeten Ringspalt ein aufschäumbares Kunststoffgemisch eingebracht und das Innenrohr sowie der Schlauch und das aufschäumbare Kunststoffgemisch in ein aus umlaufenden Formblöcken bestehendes Formwerkzeug eingeführt werden. In dem Formwerkzeug schäumt das Kunststoffgemisch auf. Abschließend wird auf den Schlauch ein Außenrohr aufextrudiert.

Der vorliegenden Erfindung liegt die Aufgabe zugrunde, das eingangs erwähnte Verfahren dahingehend zu verbessern, daß ein Leitungsrohr mit einer Wellung des Außenrohres hergestellt werden kann.

Diese Aufgabe wird durch die im Kennzeichen des Anspruchs 1 erfaßten Merkmale gelöst.

Wesentlich bei der Erfindung ist, daß die als Form für den sich aufblähenden Schaum wirkende zum Rohr geformte Kunststoffolie durch den beim Aufschäumen entstehenden Druck in die ein Wellprofil aufweisenden Formhälften des Formwerkzeuges hereingedrückt wird. Dadurch ist die Oberfläche der Isolierschicht wellenförmig ausgebildet. Beim anschließenden Extrudieren des Außenrohres legt sich dieses in die Wellung der nahezu ausgehärteten Isolierschicht ein, so daß das fertige wärmeisolierte Leitungsrohr eine wellenförmige Oberfläche aufweist. Eine exakte Anpassung des Außenrohres an die Wellform erfolgt vorzugsweise dadurch, daß zwischen der Isolierschicht und dem noch weichen extrudierten Außenrohr ein Unterdruck erzeugt wird.

Bei der Wellung handelt es sich um eine ringförmige oder schraubenlinienförmige Wellung. Diese wird bestimmt durch das Wellprofil der Formhälften.

An dem fertigen Leitungsrohr, dessen Isolierschicht und dessen Außenrohr ausgehärtet sind, greift ein Raupenabzug an. Hinter dem Raupenabzug wird das Leitungsrohr zu einem Ringbund oder auf eine Kabeltrommel gewickelt.

Im Rahmen der Erfindung liegt auch, mit dem erfindungsgemäßen Verfahren ein Doppelrohr herzustellen, d. h. an Stelle eines Innenrohres werden zwei voneinander beabstandete Innenrohre eingefahren. Diese Lösung bietet sich für Fernwärmerohre an, wo im allgemeinen eine Vor- und eine Rücklaufleitung vorgesehen sind.

Als Innenrohr kann z.B. ein Kunststoffrohr - glatt oder gewellt - oder auch ein Metallrohr - glatt oder gewellt - verwendet werden.
Die verwendete Kunststoffolie ist eine LLDPE-Folie und weist eine Wanddicke von in etwa 0,05 bis 0,5 mm auf. Sie muß so ausgebildet sein, daß sie infolge des Schäumdruckes in das Wellprofil der Formhälften eingeformt werden kann.

Vorzugsweise ist sie an der dem Schaum zugekehrten Oberfläche Korona behandelt. Dadurch ergibt sich eine innige Verbindung zwischen der Folie und dem Schaum. Da sich der extrudierte Außenmantel ebenfalls fest mit der Kunststoffolie verbindet, ergibt sich ein Rohr mit einer hervorragenden Längswasserdichtigkeit. Bei dem Schaum handelt es sich vorzugsweise um einen Polyurethanschaum mit sehr kurzer Topfzeit, d. h. der Schaum entwickelt sich innerhalb des Formwerkzeugs. Das bedeutet jedoch, daß die Abzugsgeschwindigkeit, mit der das Innenrohr von der Vorratstrommel abgezogen wird, durch die Abzugsgeschwindigkeit des Formwerkzeugs bestimmt wird. Damit das Innenrohr exakt zum Außenrohr konzentrisch gelegen ist, sind Mittel vorgesehen, das Innenrohr in zumindest zwei senkrecht zueinander stehenden Richtung zu verschieben. Zweckmäßigerweise ist hierfür ein Rollenpaar vorgesehen. Zur Überwachung der zentrischen Lage wird das mit der Schaumstoffschicht versehene Innenrohr mit energiereichen Strahlen durchstrahlt. Im Falle einer Abweichung aus der zentralen Lage, wird das Rollenpaar entsprechend quer zur Fertigungsrichtung verschoben.

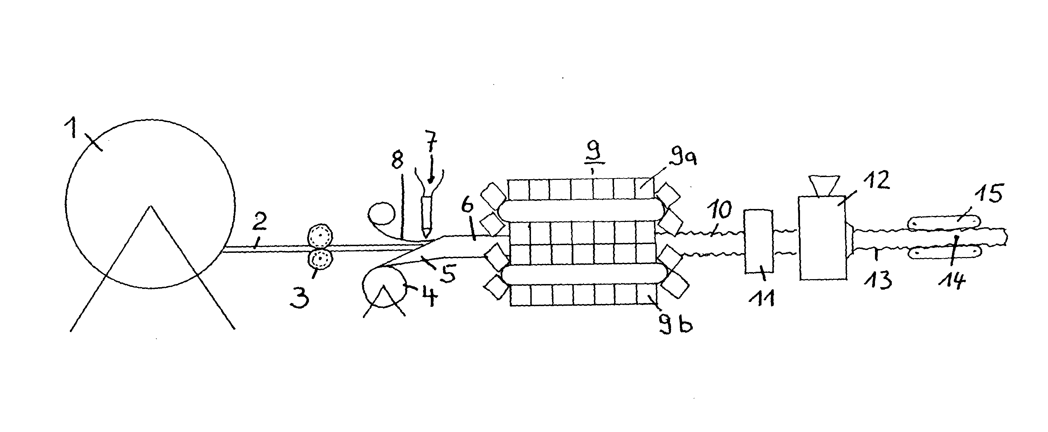

Die Erfindung ist anhand des in der Figur schematisch dargestellten Ausführungsbeispiels näher erläutert.

Von einer Vorratstrommel 1 wird kontinuierlich ein Innenrohr 2 abgezogen. Das Innenrohr 2 ist vorzugsweise ein vernetztes Polyethylenrohr, in dessen Wandung eine Schicht aus Polyvinylalkohol eingebettet ist. Das Innenrohr 2 wird durch ein Kaliberrollenpaar 3 geführt, dessen Rollen angetrieben sind. Das Kaliberrollenpaar 3 ist in zwei senkrecht aufeinanderstehenden Richtungen quer zur Fertigungsrichtung verschiebbar angeordnet.

Von einer Vorratsspule 4 wird eine Folie 5 aus LLDPE abgezogen und um das Innenrohr 2 konzentrisch zu diesem zu einem Schlitzrohr 6 mit einer verklebten oder verschweißten Längsnaht geformt. In das noch offene Schlitzrohr 6 wird ein aufschäumbares Kunststoffgemisch auf Polyurethanbasis oder auf Polyethylenbasis eingebracht. Im Falle von Polyurethan wird eine Pistole 7 verwendet, aus welcher die miteinander vermischten Komponenten auf die Folie 5 aufgespritzt werden.

In das Schlitzrohr 6 können ggfs. Meldeadern 8 eingeführt werden.

Das geschlossene Rohr wird in ein Formwerkzeug 9 eingeführt, welches aus einer Vielzahl von Formhälften 9a und 9b besteht, die gemeinsam eine "wandernde Form" für das mit der Isolierschicht und der Folie 5 versehene Innenrohr 2 bilden.

Die der Folie 5 zugekehrten Oberflächen der Formhälften 9a und 9b weisen ein Wellenprofil auf, in welches die Folie 5 infolge des Schäumdruckes eingeformt wird. Das aus dem Formwerkzeug 9 austretende Rohr 10 weist deshalb eine gewellte Oberfläche auf.

Das Rohr 10 durchläuft dann eine Röntgenstrahleinrichtung 11, mit deren Hilfe das Rohr 10 kontinuierlich auf eine exakt zentrische Lage des Innenrohres 2 überprüft wird. Im Falle einer Abweichung wird das Kaliberrollenpaar 3 entsprechend verschoben. Auf das Rohr 10 wird dann mittels eines Extruders 12 ein Außenmantel 13 aus Kunststoff extrudiert, der sich unter Einwirkung eines Unterdrucks in die Wellung des Rohres 10 einlegt. Der Außenmantel verklebt dabei aufgrund seiner durch die Extrusion erhaltenen hohen Temperatur mit der Kunststoffolie 5.

Das fertige Rohr 14 kann dann mittels eines Bandabzuges 15 abgezogen und in einer geeigneten Einrichtung zu einem Ringbund geformt werden.

Alternativ wird das Rohr 14 auf eine nicht dargestellte Trommel aufgewickelt.

## Patentansprüche

1. Verfahren zur Herstellung eines wärmeisolierten Leitungsrohres, bei dem ein Innenrohr (2) bzw. mehrere Innenrohre mit Abstand von einer zu einem Schlauch (6) geformten Kunststoffolie (5) umhüllt werden, in den Raum zwischen dem Innenrohr (2) bzw. den Innenrohren und der Kunststoffolie bzw. dem Schlauch (6) ein aufschäumbarer Kunststoff eingebracht wird und Innenrohr (2) bzw. Innenrohre und Schlauch (6) in ein aus mitlaufenden Formhälften (9a,9b) bestehendes Formwerkzeug (9) eingefahren werden, und anschließend ein Außenrohr (13) aus Kunststoff auf den Schlauch (6) aufgebracht wird, **dadurch gekennzeichnet, daß** der Schlauch (6) durch den aufschäumenden Kunststoff in ein an der inneren Oberfläche der geschlossenen Formhälften (9a,9b) befindliches Wellprofil eingedrückt wird und das Außenrohr (13) unmittelbar nach dem Austritt aus dem Mundstück des Extruderwerkzeugs (12) in die gewellte Oberfläche des Schlauches (6) eingeformt wird.

2. Verfahren nach Anspruch 1, **dadurch gekennzeichnet, daß** das oder die Innenrohre (2) mit einem Bandabzug von einer Vorratstrommel (1) abgezogen werden.

3. Verfahren nach Anspruch 1 oder 2, **dadurch gekennzeichnet, daß** die Kunststoffolie (5) von einer Vorratsspule (4) abgezogen wird, daß die Kunststoffolie (5) zu einem Schlauch (6) geformt wird, daß die Längskanten des Schlauches (6) verklebt oder verschweißt werden und daß vor dem Verkleben oder Verschweißen der Längskanten auf die Kunststoffolie (5) ein aufschäumbares Polyurethangemisch aufgetragen wird.

4. Verfahren nach einem der Ansprüche 1 bis 3, **dadurch gekennzeichnet, daß** eine Kunststoffolie (5) auf LDPE-Basis mit einer Wanddicke von 0,05 bis 0,5 mm verwendet wird.

5. Verfahren nach einem der Ansprüche 1 bis 4, **dadurch gekennzeichnet, daß** die der Schaumstoffschicht zugekehrte Oberfläche der Kunststoffolie (5) Coronabehandelt ist.

6. Verfahren nach einem der Ansprüche 1 bis 5, **dadurch gekennzeichnet, daß** das oder die Innenrohre (2) aus einem Kunststoff z. B. aus vernetztem Polyethylen mit einer Diffusionssperrschicht bestehen.

7. Verfahren nach Anspruch 6, **dadurch gekennzeichnet, daß** die Diffusionssperrschicht aus Polyvinylalkohol besteht und gemeinsam mit dem Polyethylenrohr (2) durch Koextrusion erzeugt ist.

8. Verfahren nach einem der Ansprüche 1 bis 6, **dadurch gekennzeichnet, daß** ein Innenrohr (2) aus Kunststoff mit glatter oder gewellter Wandung verwendet wird.

9. Verfahren nach einem der Ansprüche 1 bis 6, **dadurch gekennzeichnet, daß** ein Innenrohr (2) aus Metall mit glatter oder gewellter Wandung verwendet wird.

10. Verfahren nach einem der Ansprüche 1 bis 9, **dadurch gekennzeichnet, daß** das oder die Innenrohre (2) vor dem Einlauf in das Formwerkzeug (5) durch geeignete Mittel quer zur Durchlaufrichtung zumindest in zwei senkrecht zueinander laufenden Richtungen verschiebbar sind.

11. Verfahren nach Anspruch 10, **dadurch gekennzeichnet, daß** an dem Innenrohr (2) oder die Innenrohre je ein horizontal und vertikal querverschiebbares Rollensystem (3) angreift.

12. Verfahren nach einem der Ansprüche 1 bis 11, **dadurch gekennzeichnet, daß** das wärmeisolierte Leitungsrohr vor der Extrusion des Außenrohres (13) von energiereichen Strahlen durchstrahlt wird, daß dabei die Lage des oder der Innenrohre (2) angezeigt wird und bei einer Abweichung des oder der Innenrohre (2) von einer vorbestimmten Lage die Mittel (3) zur Querverschiebung des oder der Innenrohre (2) angesteuert werden.

13. Verfahren nach einem der Ansprüche 1 bis 12, **dadurch gekennzeichnet, daß** das Formwerkzeug (9) durch im Kreislauf geführte, geteilte sich zur Hohlform ergänzende Kokillen (9a,9b) mit Querrillen gebildet wird.

14. Verfahren nach einem der Ansprüche 1 bis 13, **dadurch gekennzeichnet, daß** das Einformen des Außenrohres (13) in die gewellte Oberfläche des Schlauchs (6) durch Einbringen eines Unterdrucks zwischen dem auf der Schaumstoffschicht aufliegenden Schlauch (6) und dem aus dem Extrusionsmundstück austretenden Außenrohr (13) erreicht wird.

15. Verfahren nach einem der Ansprüche 1 bis 14, **dadurch gekennzeichnet, daß** das Außenrohr (13) mit dem auf der Schaumstoffschicht aufliegenden Schlauch (6) verklebt wird.

## Claims

1. A method to manufacture a heat-insulated conduit, whereby an inner pipe (2) or several inner pipes are covered at a distance by a plastic film (5) shaped into a tube (6), and a foamable plastic is introduced in the space between the inner pipe (2) or the inner pipes and the plastic film or the tube (6), and the inner pipe (2) or inner pipes and tube (6) are fed into a molding tool (9) consisting of entrained mold halves (9a, 9b), and then the outer pipe (13) of plastic is placed on the tube (6), **characterized in that** the tube (6) is pressed into the corrugated profile in the inner surface of the closed mold halves (9a, 9b) by the foaming plastic, and the outer pipe (13) is molded onto the corrugated surface of the tube (6) directly after it leaves the extruder (12) die.

2. A method according to claim 1, **characterized in that** the inner pipe(s) (2) are removed from a supply drum (1) with a caterpillar pull-off.

3. A method according to claim 1 or 2, **characterized in that** the plastic film (5) is removed from a supply roll (4); the plastic film (5) is shaped into a tube (6); the lengthwise edges of the tube (6) are glued or welded; and a foamable polyurethane mixture is applied to the plastic film (5) before the lengthwise edges of the tube (6) are glued or welded.

4. A method according to one of claims 1 to 3, **characterized in that** a plastic film (5) based on LDPE is used that has a wall thickness of 0.05 to 0.5 mm.

5. A method according to one of claims 1 to 4, **characterized in that** the surface of the plastic film (5) facing the foam layer is treated with a corona discharge.

6. A method according to one of claims 1 to 5, **characterized in that** the inner pipes (s) (2) consist of a plastic, e.g. cross-linked polyethylene with a diffusion barrier layer.

7. A method according to claim 6, **characterized in that** the diffusion barrier layer consists of polyvinyl alcohol and is extruded together with the polyethylene pipe (2) by coextrusion.

8. A method according to one of claims 1 to 6, **characterized in that** an inner pipe (2) consisting of plastic is used with a smooth or corrugated wall.

9. A method according to one of claims 1 to 6, **characterized in that** an inner pipe (2) of metal is used with a smooth or corrugated wall.

10. A method according to one of claims 1 to 9, **characterized in that** the inner pipe(s) (2) can be moved in at least two perpendicular directions before the inlet to the mold tool (5) by suitable means at a right angle to the throughput direction.

11. A method according to claim 10, **characterized in that** a roller system (3) that can be moved horizontally and vertically at a right angle grips the inner pipe(s) (2).

12. A method according to one of claims 1 to 11, **characterized in that** the heat-insulated conduit is irradiated before extruding the outer pipe (13) by high-energy rays; that this is used to display to position of the inner pipe(s) (2) and control the means (3) to move the inner pipe(s) (2) at a right angle when the inner pipe(s) (2) deviate from a set position.

13. A method according to one of claims 1 to 12, **characterized in that** the mold tool (9) consists of divided, mating, circulating molds (9a, 9b) with transverse ribs that form a die.

14. A method according to one of claims 1 to 13, **characterized in that** the outer pipe (13) is molded into the corrugated surface of the tube (6) by a vacuum between the tube (6) on the foam layer and the outer tube (13) leaving the extrusion die.

15. A method according to one of claims 1 to 14, **characterized in that** the outer pipe (13) is glued to the tube (6) lying on the foam layer.

## Revendications

1. Procédé de fabrication d'une conduite à isolation thermique, dans lequel une feuille en matière plastique (5) en forme de tuyau flexible (6) est appliquée à une distance donnée autour d'un tube intérieur (2) ou plusieurs tubes intérieurs, une matière plastique expansible est insérée dans l'espace entre le tube intérieur (2) ou les tubes intérieurs et la feuille plastique ou le tuyau flexible (6), puis le tube intérieur (2) ou les tubes intérieurs et le tuyau flexible (6) sont introduits dans un outil de moulage (9) formé par des demi-moules (9a, 9b) entraînés, et ensuite, un tube extérieur (13) en matière plastique est appliqué sur le tuyau flexible (6), **caractérisé en ce que** le tuyau flexible (6), sous l'effet de la matière plastique soumise à une expansion, est inséré dans un profil ondulé réalisé sur les surfaces intérieures des demi-moules (9a, 9b) fermés, et le tube extérieur (13) est moulé dans la surface ondulée du tuyau flexible (6), directement à la sortie de l'orifice de filière de l'extrudeuse (12).

2. Procédé selon la revendication 1, **caractérisé en ce que** le ou les tube(s) intérieur(s) (2) sont déroulés d'un touret d'admission (1) par un dispositif de tirage.

3. Procédé selon la revendication 1 ou 2, **caractérisé en ce que** la feuille de matière plastique (5) est déroulée d'une bobine d'admission (4), **en ce que** la feuille de matière plastique (5) est moulée en forme de tuyau flexible (6), **en ce que** les bords longitudinaux du tuyau flexible (6) sont collés ou soudés et **en ce que**, avant le collage ou le soudage des bords longitudinaux, un mélange expansible à base de polyuréthanne est appliqué sur la feuille de matière plastique (5).

4. Procédé selon l'une quelconque des revendications 1 à 3, **caractérisé en ce que** l'on utilise une feuille de matière plastique (5) à base de LLDPE avec une épaisseur de 0,05 à 0,5 mm.

5. Procédé selon l'une quelconque des revendications 1 à 4, **caractérisé en ce que** la face de la feuille plastique (5) orientée vers la couche de plastique expansé est traitée en surface par un procédé corona.

6. Procédé selon l'une quelconque des revendications 1 à 5, **caractérisé en ce que** le ou les tube(s) intérieur(s) (2) sont réalisés en matière plastique, telle que le polyéthylène réticulé avec une couche anti-diffusion.

7. Procédé selon la revendication 6, **caractérisé en ce que** la couche anti-diffusion est réalisée en alcool polyvinylique et est co-extrudée conjointement avec le tube en polyéthylène (2).

8. Procédé selon l'une quelconque des revendications 1 à 6, **caractérisé en ce que** l'on utilise un tube intérieur (2) en matière plastique avec une paroi lisse ou ondulée.

9. Procédé selon l'une quelconque des revendications 1 à 6, **caractérisé en ce que** l'on utilise un tube intérieur (2) en métal avec une paroi lisse ou ondulée.

10. Procédé selon l'une quelconque des revendications 1 à 9, **caractérisé en ce que** le ou les tube(s) intérieur(s) (2) avant d'entrer dans l'outil de moulage (5) peut/peuvent être déplacé(s) par des organes appropriés transversalement au sens d'acheminement au moins dans deux directions perpendiculaires l'une à l'autre.

11. Procédé selon la revendication 10, **caractérisé en ce que** le tube intérieur (2) ou les tubes intérieurs sont saisis chacun par un système à rouleaux (3), qui peut être déplacé transversalement dans le sens horizontal et vertical.

12. Procédé selon l'une quelconque des revendications 1 à 11, **caractérisé en ce que**, avant le processus d'extrusion du tube extérieur (13), la conduite à isolation thermique est radiographiée par des faisceaux de grande énergie, **en ce que**, de plus, la position du ou des tube(s) intérieur(s) (2) est affichée et, si le ou les tube(s) intérieur(s) (2) s'écarte(nt) d'une position prédéfinie, les organes (3) sont commandés pour déplacer dans le sens transversal le ou les tube(s) intérieur(s) (2).

13. Procédé selon l'une quelconque des revendications 1 à 12, **caractérisé en ce que** l'outil de moulage (9) est formé par des coquilles (9a, 9b) animées d'un mouvement circulaire, sectionnées pour former ensemble un moule creux et munies de cannelures transversales.

14. Procédé selon l'une quelconque des revendications 1 à 13, **caractérisé en ce que** le tube extérieur (13) s'insère dans la surface ondulée du tuyau flexible (6) en raison de l'application d'une dépression entre le tuyau flexible (6), appliqué sur la couche de plastique expansé, et le tube extérieur (13), qui sort de la filière d'extrusion.

15. Procédé selon l'une quelconque des revendications 1 à 14, **caractérisé en ce que** le tube extérieur (13) est collé contre le tuyau flexible (6) appliqué sur la couche de plastique expansé.
